# EUROPEAN PATENT APPLICATION

(11) **EP 1 679 581 A1**
(43) Date of publication of application: **12.07.2006**
(21) Application number: 04775711.7
(22) Date of filing: 28.09.2004
(51) Int. Cl.: G06F 3/033, G09G 5/08, G06F 12/14

(54) **DEVICE FOR CONTROLLING A COMPUTER MOUSE-TYPE CURSOR**

(30) Priority: 01.10.2003 UA 2003108892
(71) Applicant: Bardachenko, Vitaly, Kiev, 02154 (UA)
(72) Inventor: BARDACHENKO, Vitaliy, Kiev, 02154 (UA); BARDACHENKO, Andrei, Kiev, 02154 (UA); KARIMAN, Alexandr, Donetsk, 8300 (UA); RASHKEVICH, Alexandr, Kiev, 03040 (UA); SERGIENKO, Ivan, Kiev, 01001 (UA)
(74) Representative: Heinze, Ekkehard
(86) International application number: PCT/UA2004/000069
(87) International publication number: WO 2005/031558

(57) **Abstract**

The inventive device for controlling a computer mouse-type cursor relates to computer engineering and consists of a unit for reading out an identifier coding data, a mouse controller and control keys connected to the first and second outputs thereof. Said read out unit is provided with a channel for a multicoordinate identifier. The device is provided with a control key for code reading connected to the third output of the mouse controller and to an additional controller which is connected to the read out unit and to the thirst and second controller outputs and comprises a serially connected sequential code-to-signal converter, storage unit, code readout unit and a decoder. The control input of the code readout unit is connected to the third output of the mouse controller and the control output thereof is connected to the control input of the storage unit, all said keys being connected to a power source. Said invention simplifies the structural design of the device and a software packet for user identification, ensures a sufficiently reliable protection against non-authorised access and increases the mouse multifunctionality.

## Description

### Technical Field

This invention relates to the field of computer engineering, in particular to computer cursor controlling devices.

### Prior Art

A computer cursor controlling device is known according to RU Patent No. 97102215, published on February 11, 1997, classification G09G 03/02, which comprises a manipulator device for positioning the cursor on the display monitor using cursor position sensors contained therein. The disadvantage of said device is that it lacks user identification features, which decreases the level of protection against unauthorized access to the computer data base. This can be explained by the fact that data base protection through special passwords which are entered directly into the computer is not always effective.

A device for controlling a computer mouse-type cursor is also known which provides for user identification featuring a unit for reading out the identifier coding information, a mouse controller and control keys connected thereto (US Patent No. 6 337 919, published on January 08, 2002, classification G06 K 9/00). This device is taken as a prototype for the invention. In the present case, the user's finger is used as the identifier. The information about the user's skin pattern is read out and transmitted to a computer for comparison and analysis.

This device also has a number of drawbacks:
1. The fact that the user's finger is used as an identifier increases the complexity of a number of systems of the device itself and of the computer, namely: the sensors of the read-out unit; the mechanical part of said unit, since the read out process takes place while the control key is being moved (pressed) by the finger; the device converting the informational impulses into a serial code; the computer software and others.
2. All code information is entered into the computer simultaneously, although it is well-known that computer networks are insufficiently protected from the intrusion of "burglars", i. e. hackers.
3. There is always a risk that a user's fingerprints are secretly taken and used to model dummies of the identifier.

Therefore it can be said that the known device is complex and does not provide sufficient protection against unauthorized access.

### Summary of the Invention

The invention as set forth in this application proceeds from the technical task of developing an enhanced device for controlling the computer cursor ("mouse") by way of embodying a channel for a multi-coordinate identifier in the read-out unit, and providing the device with a control key for code reading connected to the output of the mouse controller, and with an additional controller connected to the read-out unit and to the outputs of the mouse controller, which serves to hook up the mouse control keys and switches on the sequential signal-to-code converter, the storage unit, the code output unit and the decoder, all of them being connected in series, the control input of the code output unit being connected to a lead of the mouse controller in order to hook up the code output control key, and its control output being connected to the control input of the storage unit, all said keys being connected to a power source. This serves to simplify both the structural design of the device itself and the contents of the user identification software package, ensuring a sufficiently reliable protection against unauthorized access while increasing the multifunctionality of the mouse.

This is achieved by the fact that the claimed invention possesses the features of the prototype, yet in contrast to it provides for a channel for an identifier to be embodied in the read-out unit, the number of its read-out elements and outputs equalling the number of code coordinates of the identifier, and that the device is equipped with a code output control key connected to a lead of the mouse controller, and an additional controller, the inputs thereof being connected to the outputs of the read-out unit, while the outputs of said controller are connected to the leads of the mouse controller in order to hook up the mouse control keys. The additional controller switches on the sequential signal-to-code converter, the storage unit, the code output unit and the decoder, all of them being connected in series, the outputs of the decoder being at the same time the outputs of the controller itself and equalling in number the mouse control keys. The control input of the code output unit is connected to a lead of the mouse controller in order to hook up the code output control key, while the control output of said unit is connected to the control input of the storage unit, all said keys being connected to a power source.

The fact that the read-out unit provides for an identifier channel allows for the use of a key-type identifier, which significantly simplifies both the structural design of the read-out unit itself and the contents of the software package for comparing and analyzing the code information of the identifier.

The fact that the read-out unit is at the same time designed in a way that its read-out elements and outputs are equal in number to the code coordinates (lanes) of the identifier, allows for the use of multi-coordinate identifiers possessing enhanced code characteristics. The use of such identifiers that, additionally, can be re-coded (e.g. the identifier according to RUS Patent Specification No. 2097519, published on Sptember 09, 1994, classification E05B 19/18, and UKR Utility Model Specification No. 85, published on October 31, 1997, classification G06K 19/06) significantly increases protection against unauthorized access to the object.

An additional controller, the outputs of which are connected to the leads of the mouse controller, allows for the use of a standard mouse controller with control keys connected thereto, which serves to simplify the structural design of the device. At the same time, the multifunctionality of the device is increased, since the control keys are used as service keys for implementing the mouse functions as well as for potential manual code dialling, which will be explained later.

The connection between the sequential signal-to-code converter, the storage unit and the code output unit, as well as the connection of the latter and the code output control key with each other and with the mouse controller allows to transmit and store in the computer memory only part of the identifier code until the moment the user identification procedure using the full code is performed, which increases the degree of protection of the computer network against unauthorized access. The same goal is pursued by the fact that the code output control key is connected to the power source in order to ensure that the code is entered into the computer directly by the operator at the fitting point of time. The above-mentioned specific connection of the outputs of the additional controller to the mouse controller allows for manual code dialling, if necessary. Thus the multifunctionality of the device is further increased. The same goal is pursued by connecting the mouse control keys to the power source.

The fact that the outputs of the decoder are equal in number to the mouse control keys ensures the multifunctionality of the device, as has been mentioned above.

The functional reliability of the device is enhanced by a startup unit inside the additional controller, which triggers before the code information begins to be read out.

The main features of the invention are explained by a flow-chart of the device showing its main units.

### Preferred Embodiment of the Invention

The device comprises a read-out unit 1, an additional controller 2, the mouse control keys 3, a mouse controller 4, all of which are connected to each other. The mouse controller 4 is connected to a computer (not shown) via an interface 5.

The additional controller 2 switches on the startup unit 6 - the inputs thereof being the inputs of the controller itself -, the sequential signal-to-code converter 7, the storage unit 8, the code output unit 9, and the decoder 10, all of which are connected in series, the outputs of the decoder being at the same time the outputs of the controller itself.

The mouse control keys 3 are connected to the mouse controller 4 via its leads 11. To these leads the outputs 12 of the decoder 10 are connected. The function of these outputs, which are equal in number to the control keys, is to transmit separate parts of the serial code.

The device also comprises a code output control key 13 connected to the lead 14 of the controller 4. To this lead the control input 15 of the code output unit 9 is connected. The control output 16 of the same unit is connected to the control input 17 of the storage unit 8.

The keys 3 and 13 are connected to the power source 18. Units 6-10 are connected to the power source as well (not shown).

The read-out unit 1 consists of a housing with a channel for a key-type identifier and read-out elements embodied, for instance, in the form of optocoupling devices (not shown), said devices being equal in number to the code coordinates (lanes) of the identifier (for instance, for the identifier [3,4] the number of such coordinates equals two). Likewise, the number of outputs of unit 1 is equal in number to the code coordinates of the identifier.

The startup unit 6 is designed on the basis of one of the adapter circuits, e. g., circuit "I".

The device works as follows:

The information read-out process begins at the moment the identifier is inserted in the channel of read-out unit 1. The information of the code coordinates (lanes) of the identifier is read out, and as a result the signals of every single lane are transferred via their own output of unit 1 to the additional controller 2, that is, the inputs of its startup unit 6. At the beginning of the read-out process non-code information is read out from the end of the identifier (if the above-mentioned identifier is used, the information is located on its dead end in the form of two one-character signals). These signals put the startup unit 6 into standby mode.

While the identifier is being inserted, the code information is being entered via unit 6 into unit 7, where it is converted into a serial code that is transferred to the storage unit 8. Further transmission of serial code impulses is ensured by triggering the code-output unit 9, which is performed by a control signal passing from output 14 to input 15 of unit 9, and from output 16 thereof to input 17 of storage unit 8. From unit 8 on the serial code is transmitted via unit 9 to the decoder 10, where it is split up into separate parts, the number thereof being equal to the number of the control keys 3 and, correspondingly, to the number of the outputs of the decoder 10. For instance, if the above-mentioned identifier [3,4] is used, that number equals 2, the code being split into one-character parts (depending on the type of the identifier mark - conventionally 00000... or 11111...).

Having been processed by the decoder, the fractions of the code are transmitted via controller 4 and interface 5 to the computer, where they are again converted into serial code.

The above-mentioned control signal at unit 9 is generated either by the computer or the power source 18 by way of pressing key 13. The code incoming at the computer is part of the code to be used for user identification. Therefore, even in the case of a "burglar" having entered the computer's data base in order to retrieve the user's code, he will not be able to use the mouse to extract the data from the computer.

The full user code is entered into the computer at the next stages of identification.

Entering the remaining parts of the code is performed, for instance, by inserting the identifier into read-out unit 1 a second time. In this case, the procedure of processing and transmitting the code information takes place as described above, yet in contrast the control signal is transmitted to read-out unit 9 immediately before the moment of defining the user's access rights. In case of "off-nominal" situations (indication of different instances and other) it is advisable to enter the remaining parts of the code manually, using key 13.

As a result, a sample of the full code of the identifier is entered into the computer. In order to obtain access to the computer network, the user must undergo a procedure of access rights identification. This procedure is also performed by entering the full code of the user's identifier as described above. The computer compares the sample code with the user code, whereupon the user is either given or refused access to the computer network.

In certain necessary cases (loss of damage of the identifier or other) the user can enter the code directly using the control keys 3.

The claimed invention should advisably be implemented with standard mouses and conventional units. It can be applied in all fields of the national economy where electronic computing technology is used.

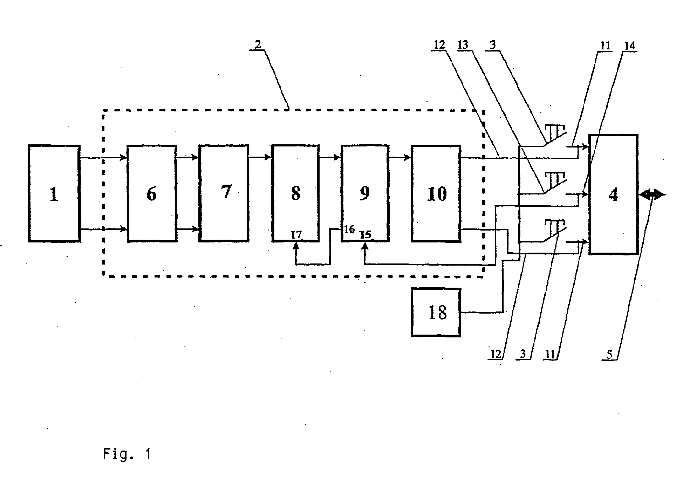

## Claims

1. A device for controlling a computer mouse-type cursor, which provides for user identification featuring a unit for reading out the code information of an identifier, a mouse controller and mouse control keys connected thereto, **characterized in that** the read-out unit has a channel for the identifier, the read-out elements and outputs thereof being equal in number to the code coordinates of the identifier, that the device is equipped with a code output control key connected to the output of the mouse controller and with an additional controller, the inputs thereof being connected to the outputs of the read-out unit, and the outputs to the leads the mouse controller, which serves to connect the mouse control keys and switches on the sequential signal-to-code converter, the storage unit, the code output unit and the decoder, all of which being connected in series, the outputs of the decoder being at the same time the outputs of said controller and equalling in number the mouse control keys, and that the control input of the code output unit is connected to the lead of the mouse controller which serves to hook up the code output control key, and the control output to the control input of the storage unit, all said keys being connected to a power source.

2. A device as described in claim 1, **characterized in that** the additional controller comprises a startup unit which is triggered before the code information of the identifier begins to be read out, the inputs thereof being at the same time the inputs of said controller, and the outputs being connected to the inputs of the sequential signal-to-code converter.
